# EUROPEAN PATENT APPLICATION

(11) **EP 0 673 749 A1**
(43) Date of publication of application: **27.09.1995**
(21) Application number: 95302010.4
(22) Date of filing: 27.03.1995
(51) Int. Cl.: B29C 51/26, B29C 51/10

(54) **Vacuum moulding apparatus**

(30) Priority: 25.03.1994 GB 9405997
(71) Applicant: Ash Hydraulics Limited, Glasgow G74 5HG, Scotland (GB)
(72) Inventor: Hall, Gordon, Dalry, Ayrshire, KA24 5BZ (GB)
(74) Representative: Murgitroyd, Ian G.

(57) **Abstract**

Vacuum Moulding Apparatus has a mould (2) with an outer rim (7) adapted to receive a plastics sheet (8). The perimeter of the sheet (8) is clamped to the rim (7) by clamp members (10) which are both pivotally and slidably mounted.

## Description

This invention relates to apparatus for moulding plastics materials, such as acrylic. The invention finds a particular application in the moulding of plastics baths.

Baths, basins, jacuzzis and other products of this type may be manufactured from a plastics material, such as acrylic or from ceramic materials. Where the baths are made from a plastics material it has been found useful to heat an acrylic sheet in an appropriate oven, place the heated sheet over a mould, create a vacuum between the mould and the sheet such that the sheet adopts the shape of the mould, cool and remove the moulded sheet and trim the product as required. Further finishing processes may also be employed.

In the past, sophisticated machinery has been developed which includes an oven and one or more moulds. However, production lines producing the aforesaid articles have not been as efficient as desirable as it has been necessary to separate, in time, the process of heating the acrylic or other plastics sheet and the process of moulding the sheet. Conventionally, it may take up to three minutes for the sheet to be heated to an appropriate temperature at which it is safe to mould. Furthermore, automating the process of moving the acrylic sheet from an appropriate oven to an appropriate position wherein the moulding process may commence has necessitated expensive and sophisticated machinery. It has also caused a compromise in the requirement of holding or clamping the acrylic sheet, at least around the rim of the product, prior to and during the moulding process.

According to the present invention, there is provided apparatus for use in manufacturing a moulded plastics product comprising a dedicated oven and a separate moulding device, wherein the moulding device comprises a mould and means for creating a vacuum between the plastic sheets material and the mould, characterised in that the moulding device further includes means for clamping the edge of the plastics sheet material during the moulding process.

Preferably, the product is one of the following group of products; baths, basins, sinks, spa baths, jacuzzis.

Preferably, the clamping apparatus comprises clamp members pivotable from a first position wherein they are not in contact or interference with a plastics sheet positioned on the mould to a second position wherein the clamping members are in contact with and securing the plastics sheet to the mould.

Preferably, the pivotable motion is controlled by hydraulic pistons.

Preferably the clamp members are adapted to move laterally, thereby being suitable for use in relation to plastic sheets of various dimensions. The movement may be automated by control and processing means, such that dimensions of a respective sheet to be moulded (or some other relevant data) may be entered so as to cause the clamp members to move to a corresponding and appropriate position.

The lateral movement of the clamp members may also be used to tension the plastics sheet prior to and during moulding. The tensioning would preferably be conducted by movement of the clamp members at a controlled velocity.

Preferably, the mould comprises a concave portion and a rim, wherein the concave portion is provided with a plurality of pin holes with which are connected vacuum creating hoses.

Preferably, heaters are provided to maintain the rim of the mould at an appropriate temperature.

Preferably, cooling means is provided which is adapted to jet compressed air in the vicinity of the rim of the plastics sheet after moulding.

It is also preferable to provide a plug forming device which may be movable within the cavity of the mould and outwith the cavity of the mould.

Preferably, the clamping apparatus may be adjusted to facilitate clamping of plastics sheets of variable size.

An example embodiment of the invention will now be described, by way of example only, with reference to the accompanying Figure which is a sectional elevation of vacuum moulding apparatus.

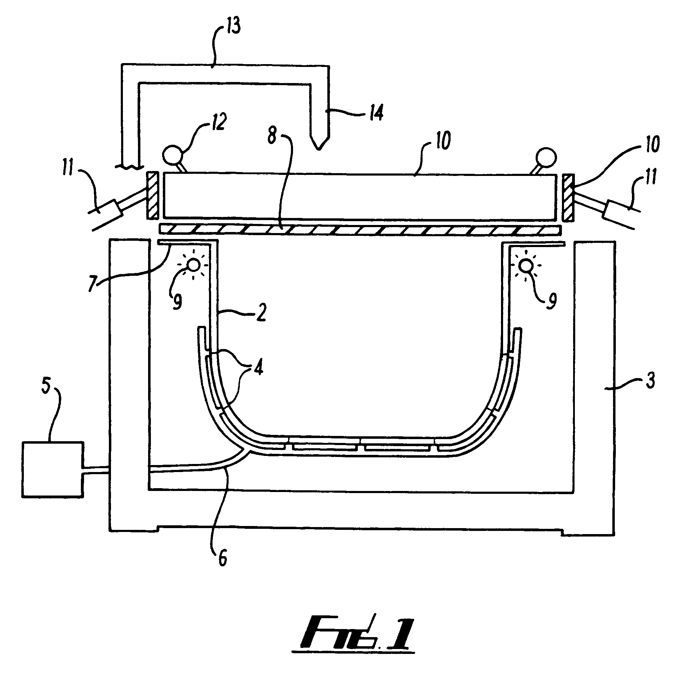

Apparatus for use in moulding an acrylic plastics sheet into the shape of a bath is shown in Fig. 1. The apparatus includes a mould 2 which is supported in a frame 3. The mould 2 has several pin holes 4 located in its surface which are caused to communicate with each other and a vacuum pump 5 via the flexible hoses 6.

The top of the mould 2 is provided with an integral rim 7 which is substantially flat and horizontal. The rim 7 provides a resting support for the placement of the acrylic sheet 8 intended to be moulded.

Directly below the rim 7 may be included rim heaters 9 which are adapted to maintain the rim 7 of the mould 2 at an elevated temperature, in use.

The apparatus also comprises clamp members 10 which are positioned and adapted to clamp the edges of the acrylic sheet 8 in position on the rim 7 of the mould 2. In the embodiment shown, the clamp members 10 comprise four elongate bars, each of which are pivotably mounted and operable from a first position where they are held away from contact or interference with the acrylic sheet 8 to a second position where at they are in contact with and secure the edge of the plastics sheet 8 to the rim 7 of the mould 2. The pivotable operation is enabled by the hydraulic pistons 11 which are controlled by a hydraulic circuit (not shown).

In a more sophisticated embodiment of the invention, the clamp members 10 and the hydraulic pistons 11 are movable to cater for moulds and acrylic sheets of various size. In such embodiments, the clamp members 10 may be supported on a movable track and each comprise locking means for locking them in a position with is appropriate for the size of the plastic sheet and mould to be employed. Lateral movement of the clamp members 10 also enables tensioning or stretching of the plastics sheet and in use.

The apparatus also includes a cooling means 12 which, in the embodiment shown in Fig. 1, comprises a tube supported near and above the clamp members 10; the tube having a plurality of spaced nozzles adapted to jet cooling air on to the plastics sheet 8 once moulded.

There is further provided in the apparatus shown in Fig. 1 an arm 13 with a punching device 14 which is used for punching holes in the moulded sheet 8; the holes being suitable for plugs, drainage outlets or the like. Again, in a more sophisticated embodiment than that shown in the drawing, the arm 13 may be supported on a track and thus be movable such that a plug hole may be punched in any desirable location in the moulded bath.

Associated with the apparatus shown in the drawing might be further apparatus including a dedicated heater for heating the acrylic sheet 8 prior to its placement on the rim 7 of the mould 2, and a trimming machine for trimming the edges of the sheet, as desired, once the moulding process has been completed. Both heater and trimming machine are preferably, although not essentially, separate apparatus for moulding apparatus shown in Fig. 1, thereby enabling the heating and trimming process to be conducted on the sheet or bath at the same time as a further sheet is undergoing the moulding process. Having dedicated apparatus in this way, enables a more efficient production line to be maintained.

In use, an acrylic sheet 8 is placed in a dedicated heater and heated until the acrylic is soft and mouldable. The sheet 8 is then conveyed, perhaps by hand, from the heater to its position on the rim 7 of the mould 2. This is done while the clamp members 10 are in the first position, as shown in the drawing. Also, prior to placing the acrylic sheet 8 on the rim 7, it is preferable to heat the rim 7 using the rim heaters 9 so that the rim 7 does not instantly cool, upon contacting the edge portions of the sheet 8.

The vacuum pump 5 is then employed such that the air located in the chamber formed by the mould 2 and the sheet 8 is caused to escape via the pin holes 4 and hoses 6. The vacuum also generated in the chamber causes the acrylic sheet 8 to take up the shape of the mould 2 reducing the volume of the chamber between the mould 2 and sheet 8. Once the sheet 8 has assumed the moulded shape, cooling air is jetted from the nozzles of the cooling apparatus 12, particularly in the direction of the rim 7 and edge portions of the acrylic sheet 8. Once cooled, personnel may grip the edge portions of the moulded sheet 8 and lift it from the mould, having firstly released the clamp members 10 into the second position. The operation of the punch 14 on the arm 13 may also be implemented prior to removal of the moulded sheet 8 and preferably while the sheet remains at an elevated temperature.

The preferred embodiment of the invention provides for hydraulically activating pistons 11 and arm 13. However, the invention is not limited in this way and mechanical activation may also be utilised.

Further modifications and improvements may be incorporated into the specification without departing from the scope or spirit of the invention herein intended.

## Claims

1. Apparatus for use in manufacturing a moulded plastics product comprising a dedicated oven and a separate moulding device, wherein the moulding device comprises a mould (2) and means for clamping the edge of the plastics sheet material (8) during the moulding process and means for creating a vacuum between the plastics sheet material (8) and the mould (2).

2. Apparatus as claimed in Claim 1 for use in manufacturing a moulded plastics product, wherein the product is one of the following group of products; baths, basins, sinks, spa baths, jacuzzis.

3. Apparatus as claimed in Claim 1 or Claim 2, wherein the clamping apparatus comprises clamp members (10) pivotable from a first position wherein they are not in contact or interference with a plastics sheet (8) positioned on the mould (2) to a second position wherein the clamp members (10) are in contact with and securing the plastics sheet (8) to the mould (2).

4. Apparatus as claimed in Claim 3, wherein the pivotable motion is controlled by hydraulic pistons (11).

5. Apparatus as claimed in anyone of the preceding Claims wherein the clamp members (10) are adapted to move laterally, thereby being suitable for use in relation to plastics sheets (8) of various dimensions.

6. Apparatus as claimed in Claim 5 wherein said lateral movement may be automated by control and processing means, such that dimensions of a respective sheet to be moulded (or some other relevant data) may be entered so as to cause the clamp members (10) to move to a corresponding and appropriate position.

7. Apparatus as claimed in Claim 5 or Claim 6, wherein said lateral movement of the clamp members (10) may also be used to tension the plastics sheet (8) prior to and during moulding.

8. Apparatus as claimed in any one of the preceding Claims, wherein the mould (2) comprises a concave portion and a rim (7), characterised in that the concave portion is provided with a plurality of pin holes (4) with which are connected vacuum creating hoses (6).

9. Apparatus as claimed in Claim 8, characterised in that heaters (9) are provided to maintain the rim (7) of the mould (2) at an appropriate temperature.

10. Apparatus as claimed in Claim 8 or Claim 9, characterised in that cooling means (12) is provided which is adapted to jet compressed air in the vicinity of the rim of plastics sheet (8) after moulding.

11. Apparatus as claimed in anyone of the preceding Claims, including a plug forming device (13) which may be movable within the cavity of the mould and outwith the cavity of the mould (2).
